# EUROPÄISCHE PATENTANMELDUNG

(11) **EP 4 273 636 A1**
(43) Veröffentlichungstag der Anmeldung: **08.11.2023**
(21) Anmeldenummer: 22171748.1
(22) Anmeldetag: 05.05.2022
(51) Int. Cl.: G05B 13/02

(54) **VERFAHREN UND STEUEREINRICHTUNG ZUM STEUERN EINER MASCHINE**

(71) Anmelder: Siemens Aktiengesellschaft, 80333 München (DE)
(72) Erfinder: Swazinna, Phillip, 85375 Neufahrn (DE); Udluft, Steffen, 82223 Eichenau (DE)
(74) Vertreter: Siemens Patent Attorneys

(57) **Zusammenfassung**

Erfindungsgemäß werden durch Steuerung der Maschine (M) mittels verschiedener Steuersysteme gewonnene Trainingsdatensätze (TD) eingelesen, die jeweils einen Zustandsdatensatz (S) sowie einen Aktionsdatensatz (A) umfassen. Weiterhin wird ein Performanzbewerter (PEV) bereitgestellt, der für einen Steuerungsagenten (TP1,TP2,...) eine Performanz für ein Steuern der Maschine durch diesen Steuerungsagenten ermittelt. Erfindungsgemäß wird für die verschiedenen Steuersysteme jeweils ein steuersystemspezifischer Steuerungsagent (P1,P2,...) anhand der einem jeweiligen Steuersystem zugeordneten Trainingsdatensätze darauf trainiert, anhand eines Zustandsdatensatzes (S) einen Aktionsdatensatz (A) zu reproduzieren. Darüber hinaus wird in einem Parameterraum der steuersystemspezifischen Steuerungsagenten (P1,P2,...) eine jeweilige Umgebung (U1,U2,...) um die trainierten steuersystemspezifischen Steuerungsagenten anhand eines Abstandsmaßes (D) abgegrenzt. Innerhalb der Umgebungen (U1,U2,...) wird dann eine Vielzahl von Test-Steuerungsagenten (TP1,TP2,...) generiert, für die jeweils ein Performanzwert durch den Performanzbewerter (PEV) ermittelt wird. Abhängig von den ermittelten Performanzwerten wird schließlich ein performanzoptimierender Steuerungsagent (PO) aus den Test-Steuerungsagenten (TP1,TP2,...) selektiert, mittels dessen die Maschine (M) gesteuert wird.

## Beschreibung

Zum Steuern von komplexen Maschinen, wie z.B. Robotern, Motoren, Fertigungsanlagen, Fabriken, Werkzeugmaschinen, Fräsmaschinen, Gasturbinen, Windturbinen, Dampfturbinen, chemischen Reaktoren, Kühlanlagen oder Heizungsanlagen werden im zunehmenden Maße datengetriebene Verfahren des maschinellen Lernens eingesetzt. Hierbei werden insbesondere künstliche neuronale Netze mittels Verfahren des bestärkenden Lernens darauf trainiert, für einen jeweiligen Zustand der Maschine eine zustandsspezifische Steueraktion zum Steuern der Maschine zu generieren, durch die eine Performanz der Maschine optimiert wird. Ein solcher zum Steuern einer Maschine optimierter Steuerungsagent wird häufig auch als Policy oder kurz als Agent bezeichnet.

Für eine erfolgreiche Optimierung eines Steuerungsagenten werden in der Regel große Mengen von Betriebsdaten der zu steuernden Maschine als Trainingsdaten benötigt. Die Trainingsdaten sollten dabei die möglichen Betriebszustände und andere Betriebsbedingungen der Maschine möglichst repräsentativ abdecken.

In vielen Fällen liegen derartige Trainingsdaten in Form von Datenbanken vor, in denen an der Maschine aufgezeichnete Betriebsdaten gespeichert sind. Derartige gespeicherte Trainingsdaten werden häufig auch als Batch-Trainingsdaten oder Offline-Trainingsdaten bezeichnet. Erfahrungsgemäß hängt ein Trainingserfolg in der Regel davon ab, inwieweit die möglichen Betriebsbedingungen der Maschine durch die verfügbaren Trainingsdaten abgedeckt sind. Entsprechend ist damit zu rechnen, dass sich trainierte Steuerungsagenten in solchen Betriebszuständen ungünstig verhalten, für die nur wenige Trainingsdaten verfügbar waren.

Zur Verbesserung des Steuerverhaltens in von Trainingsdaten wenig abgedeckten Bereichen eines Zustandsraums wird in der Publikation "Deployment-Efficient Reinforcement Learning via Model-Based Offline Optimization" von Tatsuya Matsushima, Hiroki Furuta, Yutaka Matsuo, Ofir Nachum und Shixiang Gu auf https://arxiv.org/abs/2006.03647 (abgerufen am 14. April 2022) ein rekursives Lernverfahren vorgeschlagen. Dieses Verfahren liefert allerdings stochastische Policies, die zum gleichen Betriebszustand mitunter sehr unterschiedliche und nicht sicher vorhersehbare Steueraktionen ausgeben können. Auf diese Weise kann zwar der Zustandsraum effizient exploriert werden, doch sind derartige stochastische Policies auf vielen Maschinen nicht zulässig, insofern sie im Voraus nicht sicher validiert werden können.

Ein weiteres Verfahren zur Verbesserung eines Steuerverhaltens von Steuerungsagenten ist aus der Online-Publikation "Overcoming Model Bias for Robust Offline Deep Reinforcement Learning" von Phillip Swazinna, Steffen Udluft und Thomas Runkler auf https://arxiv.org/pdf/2008.05533 (abgerufen am 14. April 2022) bekannt. Aber auch bei diesem Verfahren sind die resultierende Policies oft nicht eindeutig bewertbar oder validierbar.

Es ist Aufgabe der vorliegenden Erfindung, ein Verfahren und eine Steuereinrichtung zum Steuern einer Maschine anzugeben, die ein effizienteres Training auch nicht-stochastischer Steuerungsagenten erlauben.

Gelöst wird diese Aufgabe durch ein Verfahren mit den Merkmalen des Patentanspruchs 1, durch eine Steuereinrichtung mit den Merkmalen des Patentanspruchs 9, durch ein Computerprogrammprodukt mit den Merkmalen des Patentanspruchs 10 sowie durch ein computerlesbares Speichermedium mit den Merkmalen des Patentanspruchs 11.

Zum Steuern einer Maschine mittels eines Steuerungsagenten werden durch Steuerung der Maschine mittels verschiedener Steuersysteme gewonnene und einem jeweiligen Steuersystem zugeordnete Trainingsdatensätze eingelesen. Unter dem Begriff Steuern sei dabei auch ein Regeln der Maschine verstanden. Die Trainingsdatensätze umfassen jeweils einen einen Zustand der Maschine spezifizierenden Zustandsdatensatz sowie einen eine Steueraktion spezifizierenden Aktionsdatensatz. Weiterhin wird ein Performanzbewerter bereitgestellt, der für einen Steuerungsagenten eine Performanz für ein Steuern der Maschine durch diesen Steuerungsagenten ermittelt. Erfindungsgemäß wird für die verschiedenen Steuersysteme jeweils ein steuersystemspezifischer Steuerungsagent anhand der dem jeweiligen Steuersystem zugeordneten Trainingsdatensätze darauf trainiert, anhand eines Zustandsdatensatzes einen Aktionsdatensatz zu reproduzieren. Darüber hinaus wird in einem Parameterraum der steuersystemspezifischen Steuerungsagenten eine jeweilige Umgebung um die trainierten steuersystemspezifischen Steuerungsagenten anhand eines Abstandsmaßes abgegrenzt. Innerhalb der Umgebungen wird dann eine Vielzahl von Test-Steuerungsagenten generiert, für die jeweils ein Performanzwert durch den Performanzbewerter ermittelt wird. Abhängig von den ermittelten Performanzwerten wird schließlich ein performanzoptimierender Steuerungsagent aus den Test-Steuerungsagenten selektiert, mittels dessen die Maschine gesteuert wird.

Zum Ausführen des erfindungsgemäßen Verfahrens sind eine entsprechende Steuereinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

In der Praxis kommt es häufig vor, dass eine Maschine oder ein Maschinentyp in einem längeren Betriebszeitraum durch verschiedene Steuersysteme, z.B. verschiedene regelbasierte oder lernbasierte Steuerungen gesteuert oder betrieben wird. Die dabei anfallenden Betriebsdaten können dann in kumulierter Form verwendet werden, um eine möglichst große Menge an Trainingsdaten zum Trainieren von Steuerungsagenten bereitzustellen. Insofern die Trainingsdaten auf unterschiedlichen Steuersystemen basieren, wird ein Zustandsraum der Maschine durch solche Trainingsdaten häufig besser abgedeckt. Allerdings führen Unterschiede in den von den Steuersystemen ausgeführten Steuerverfahren oft dazu, dass ein Training eines Steuerungsagenten dadurch beeinträchtigt wird, dass die Trainingsdaten unterschiedliche Steueraktionen zum gleichen oder zu ähnlichen Maschinenzuständen enthalten. Von diesem Problem sind insbesondere deterministische Steuerungsagenten betroffen.

Der vorstehende Nachteil kann mittels der Erfindung häufig vermieden oder zumindest abgeschwächt werden, insofern mehrere steuersystemspezifische Steuerungsagenten vorgesehen sind, die jeweils spezifisch anhand der dem betreffenden Steuersystem zugeordneten Trainingsdaten trainiert werden. Derartige steuersystemspezifische Steuerungsagenten lassen sich in der Regel genauer, effizienter und/oder schneller auf eine Reproduktion eines Steuerverhaltens eines jeweiligen Steuersystems trainieren als ein einzelner steuersystemunspezifischer Steuerungsagent. Dies gilt insbesondere auch für deterministische Steuerungsagenten.

Ein weiterer Vorteil der Erfindung ist dadurch bedingt, dass der performanzoptimierende Steuerungsagent aus einer Umgebung um einen der trainierten steuersystemspezifischen Steuerungsagenten selektiert wird. Somit unterscheidet sich der zum Steuern der Maschine zu verwendende performanzoptimierende Steuerungsagent in vielen Fällen nur verhältnismäßig wenig von dem betreffenden trainierten steuersystemspezifischen Steuerungsagenten. Entsprechend unterscheidet sich ein Steuerverhalten des performanzoptimierenden Steuerungsagenten häufig nur wenig von einem Steuerverhalten des zugeordneten Steuersystems. Hierdurch kann in vielen Fällen effektiv vermieden werden, dass eine reine Performanzoptimierung zu einem Steuerungsagenten führt, der zu stark von bekannten Steuersystemen abweicht und/oder in von den Trainingsdaten unzureichend abgedeckten Zustandsbereichen operiert. Gleichzeitig können durch eine Verwendung deterministischer Steuerungsagenten Validierungsprobleme stochastischer Steuerungsagenten vermieden werden.

Vorteilhafte Ausführungsformen und Weiterbildungen der Erfindung sind in den abhängigen Ansprüchen angegeben.

Gemäß einer vorteilhaften Ausführungsform der Erfindung kann als Abstandsmaß für einen Abstand zwischen einem ersten und einem zweiten Steuerungsagenten im Parameterraum eine Abweichung von neuronalen Gewichten oder anderen Modellparametern des ersten Steuerungsagenten von denjenigen des zweiten Steuerungsagenten ermittelt werden. Alternativ oder zusätzlich kann als Abstandmaß eine Abweichung eines Steuerverhaltens des ersten Steuerungsagenten von demjenigen des zweiten Steuerungsagenten ermittelt werden. Durch eine jeweilige Abweichung kann eine Verschiedenheit des ersten Steuerungsagenten vom zweiten Steuerungsagenten quantifiziert werden. Vorzugsweise kann als jeweilige Abweichung ein ggf. gewichteter euklidischer Abstand zwischen Vektordarstellungen der neuronalen Gewichte, der Modellparameter oder des Steuerverhaltens ermittelt werden.

Damit kann die jeweilige Umgebung um einen jeweiligen trainierten steuersystemspezifischen Steuerungsagenten als dasjenige Gebiet des Parameterraums abgegrenzt werden, in dem die Modellparameter oder das Steuerverhalten eines darin befindlichen Steuerungsagenten nur wenig von den Modellparametern bzw. dem Steuerverhalten des jeweiligen trainierten steuersystemspezifischen Steuerungsagenten abweichen. Insbesondere kann die jeweilige Umgebung als dasjenige Gebiet des Parameterraums abgegrenzt werden, in dem die Abweichung der Modellparameter oder des Steuerverhaltens einen vorgegebenen Schwellwert unterschreitet.

Gemäß weiterer vorteilhafter Ausführungsformen der Erfindung können ein populationsbasiertes Optimierungsverfahren, ein gradientenfreies Optimierungsverfahren, eine Partikelschwarmoptimierung, ein genetisches Optimierungsverfahren und/oder ein gradientenbasiertes Optimierungsverfahren dazu verwendet werden, die Test-Steuerungsagenten zu generieren und/oder anhand der ermittelten Performanzwerte eine performanzgetriebene Optimierung auszuführen. Die vorstehenden Optimierungsverfahren lassen sich insbesondere bei heterogenen und zumindest teilweise diskreten Optimierungsproblemen vorteilhaft anwenden. Darüber hinaus steht eine Vielzahl von effizienten und robusten numerischen Implementierungen für die Optimierungsverfahren zur Verfügung.

Gemäß einer weiteren vorteilhaften Ausführungsform der Erfindung kann in jeder der Umgebungen jeweils eine Vielzahl von Test-Steuerungsagenten generiert und/oder eine performanzgetriebene Optimierung von Test-Steuerungsagenten ausgeführt werden. Auf diese Weise kann für jeden der steuersystemspezifischen Steuerungsagenten und damit für jedes der Steuersysteme ein spezifischer performanzoptimierender Steuerungsagent ermittelt werden. Der zum Steuern der Maschine zu verwendende Steuerungsagent kann dann aus den steuersystemspezifischen performanzoptimierenden Steuerungsagenten selektiert werden.

Nach einer weiteren vorteilhaften Ausführungsform der Erfindung kann ein jeweiliger Trainigsdatensatz neben einem Zustandsdatensatz und einem eine Steueraktion spezifizierenden Aktionsdatensatz einen aus einer Anwendung dieser Steueraktion resultierenden Performanzwert umfassen. Weiterhin kann der Performanzbewerter ein Maschinenlernmodul, insbesondere ein Transitionsmodell umfassen, das darauf trainiert ist oder anhand der Trainingsdatensätze darauf trainiert wird, anhand eines Zustandsdatensatzes und eines Aktionsdatensatzes einen resultierenden Performanzwert zu reproduzieren. Das Maschinenlernmodul kann damit als Fitness-Evaluator für einen Steuerungsagenten fungieren.

Insbesondere können dem jeweiligen Test-Steuerungsagenten Zustandsdatensätze zugeführt und resultierende Ausgabedaten des Test-Steuerungsagenten als Aktionsdatensätze zusammen mit den Zustandsdatensätzen in das trainierte Maschinenlernmodul eingespeist werden. Aus einem resultierenden Ausgabewert des trainierten Maschinenlernmoduls kann dann ein Performanzwert für den jeweiligen Test-Steuerungsagenten ermittelt werden.

Vorzugsweise kann das Maschinenlernmodul weiterhin darauf trainiert sein oder darauf trainiert werden, anhand eines Zustandsdatensatzes und eines Aktionsdatensatzes einen resultierenden Folgezustand der Maschine zu prädizieren. Für einen jeweiligen Folgezustand kann dann durch den jeweiligen Test-Steuerungsagenten eine Folge-Steueraktion ermittelt werden, die wiederum durch das Maschinenlernmodul hinsichtlich ihrer Performanz bewertet werden kann. Auf diese Weise kann ein Zustand und eine Steueraktion schrittweise in die Zukunft extrapoliert bzw. vorhergesagt werden, so dass eine mehrere Zeitschritte umfassende Steuertrajektorie ermittelt werden kann. Eine solche Extrapolation wird häufig auch als Roll-Out oder virtueller Roll-Out bezeichnet. Für die Steuertrajektorie kann dann eine über mehrere Zeitschritte kumulierte Performanz berechnet und vorzugsweise der Steueraktion am Anfang der Trajektorie zugeordnet werden. Auf diese Weise können die Steueraktionen auch hinsichtlich längerfristiger Performanzziele optimiert werden. Eine solche kumulierte Performanz wird im Zusammenhang des bestärkenden Lernens häufig auch als "Return" bezeichnet. Zur Berechnung des Returns können die für zukünftige Zeitschritte ermittelten Performanzwerte diskontiert, d.h. mit für jeden Zeitschritt kleiner werdenden Gewichten versehen werden.

Ein Ausführungsbeispiel der Erfindung wird nachfolgend anhand der Zeichnung näher erläutert. Dabei veranschaulichen jeweils in schematischer Darstellung:
Figur 1 eine erfindungsgemäße Steuereinrichtung beim Steuern einer Maschine mittels eines Steuerungsagenten,
Figur 2 ein Training eines Maschinenlernmoduls zur Performanzbewertung einer Steueraktion,
Figur 3 eine Ermittlung einer Performanz eines Steuerungsagenten,
Figur 4 ein Training von steuersystemspezifischen Steuerungsagenten,
Figur 5 eine Ermittlung eines performanzoptimierenden Steuerungsagenten zum Steuern einer Maschine, und
Figur 6 Parameterraumumgebungen von steuersystemspezifischen Steuerungsagenten.

Insofern in verschiedenen Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

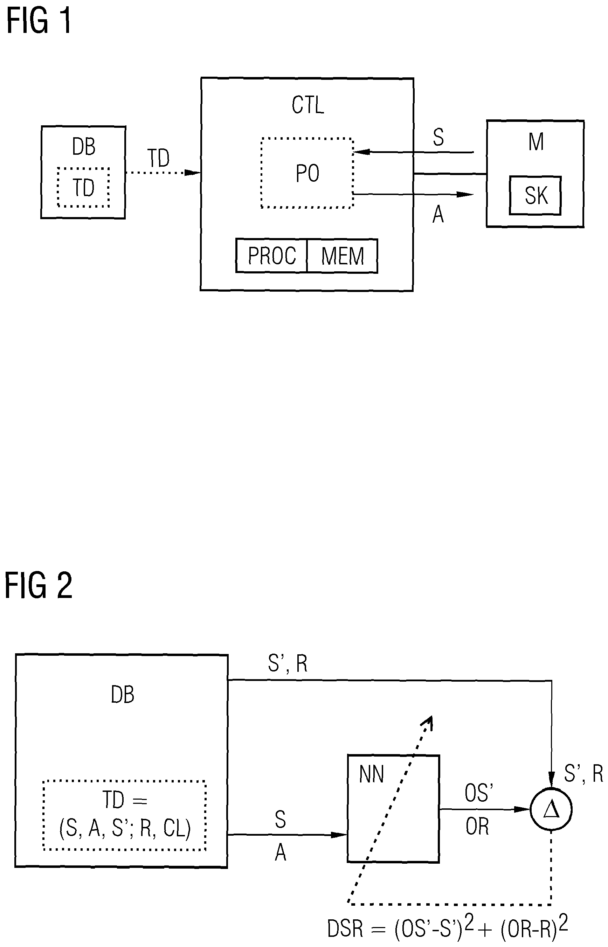

Figur 1 veranschaulicht eine erfindungsgemäße Steuereinrichtung CTL beim Steuern einer Maschine M, z.B. eines Roboters, eines Motors, einer Fertigungsanlage, einer Fabrik, einer Werkzeugmaschine, einer Fräsmaschine, einer Gasturbine, einer Windturbine, einer Dampfturbine, eines chemischen Reaktors, einer Kühlanlage, einer Heizungsanlage oder einer anderen Anlage. Insbesondere kann auch eine Komponente oder ein Teilsystem einer Maschine als Maschine M aufgefasst werden.

Die Maschine M verfügt über eine Sensorik SK zum vorzugsweise fortlaufenden Erfassen und/oder Messen von Systemzuständen oder Teilsystemzuständen der Maschine M.

Die Steuereinrichtung CTL ist in Figur 1 extern zur Maschine M dargestellt und mit dieser gekoppelt. Alternativ kann die Steuereinrichtung CTL auch ganz oder teilweise in die Maschine M integriert sein.

Die Steuereinrichtung CTL verfügt über einen oder mehrere Prozessoren PROC zum Ausführen von Verfahrensschritten der Steuereinrichtung CTL sowie über einen oder mehrere mit dem Prozessor PROC gekoppelte Speicher MEM zum Speichern der von der Steuereinrichtung CTL zu verarbeitenden Daten.

Weiterhin weist die Steuereinrichtung CTL einen vorzugsweise deterministischen Steuerungsagenten PO zum Steuern der Maschine M auf. Ein deterministischer Steuerungsagent ist dadurch gekennzeichnet, dass er bei gleichen Eingabedaten gleiche Ausgabedaten ausgibt. Aufgrund seines deterministischen Verhaltens ist ein deterministischer Steuerungsagent leichter validierbar oder überprüfbar als ein nicht deterministischer oder stochastischer Steuerungsagent.

Für das vorliegende Ausführungsbeispiel sei angenommen, dass der Steuerungsagent PO als künstliches neuronales Netz implementiert und durch Verfahren des bestärkenden Lernens trainiert oder trainierbar ist.

Der Steuerungsagent PO wird vorab anhand von Trainingsdaten datengetrieben trainiert und/oder selektiert, um die Steuereinrichtung CTL zum optimierten Steuern der Maschine M zu konfigurieren. Die Trainingsdaten werden vorzugsweise einer Datenbank DB entnommen, in der die Trainingsdaten in Form einer großen Menge von Trainingsdatensätzen TD gespeichert sind. Die Trainingsdaten wurden an der Maschine M oder an einer dazu ähnlichen Maschine aufgezeichnet oder gemessen und/oder simulativ oder datengetrieben generiert.

Wie oben bereits angedeutet, werden derartige Trainingsdaten in der Regel über einen längeren Betriebszeitraum gesammelt, während die Maschine M, eine dazu ähnliche Maschine und/oder eine Simulation der Maschine durch verschiedene Steuersysteme gesteuert wird. Ein jeweiliger Trainingsdatensatz TD ist dabei demjenigen Steuersystem zugeordnet, durch dessen Steuerung der jeweilige Trainingsdatensatz TD erzeugt wurde.

Auf der Grundlage dieser Trainingsdaten wird der Steuerungsagent PO darauf trainiert und/oder dahingehend selektiert, zu einem jeweils vorgegebenen Zustand der Maschine M eine Steueraktion zu ermitteln, durch die eine Performanz der Maschine M optimiert wird. Unter einem Optimieren sei dabei auch ein Annähern an ein Optimum verstanden.

Die zu optimierende Performanz kann insbesondere eine Leistung, einen Ertrag, eine Geschwindigkeit, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, eine physikalische Eigenschaft, eine mechanische Eigenschaft, eine elektrische Eigenschaft, eine einzuhaltende Nebenbedingung oder andere zu optimierende Zielgrößen der Maschine M oder einer ihrer Komponenten betreffen.

Nach der Optimierung kann der trainierte und/oder selektierte Steuerungsagent PO zum optimierten Steuern der Maschine M eingesetzt werden. Zu diesem Zweck werden aktuelle Betriebszustände und/oder andere Betriebsbedingungen der Maschine M durch die Sensorik SK fortlaufend gemessen oder anderweitig ermittelt und in Form von Zustandsdatensätzen S von der Maschine M zur Steuereinrichtung CTL übermittelt. Alternativ oder zusätzlich können die Zustandsdatensätze S zumindest teilweise mittels eines Simulators, insbesondere eines digitalen Zwillings der Maschine M simulativ ermittelt werden.

Ein jeweiliger Zustandsdatensatz S spezifiziert einen Zustand der Maschine M und wird vorzugsweise durch einen numerischen Zustandsvektor dargestellt. Die Zustandsdatensätze S können Messdaten, Sensordaten, Umgebungsdaten oder andere im Betrieb der Maschine M anfallende oder den Betrieb beeinflussende Daten umfassen, insbesondere Daten über Aktorstellungen, auftretende Kräfte, Leistung, Druck, Temperatur, Ventilpositionen, Emissionen und/oder Ressourcenverbrauch der Maschine M oder einer ihrer Komponenten. Bei Produktionsanlagen können die Zustandsdatensätze S auch eine Produktqualität oder andere Produkteigenschaften betreffen.

Die zur Steuereinrichtung CTL übermittelten Zustandsdatensätze S werden in den trainierten und/oder selektierten Steuerungsagenten PO als Eingabedaten eingespeist. Anhand eines jeweils zugeführten Zustandsdatensatzes S generiert der Steuerungsagent PO dann eine performanzoptimierende Steueraktion in Form eines Aktionsdatensatzes A. Durch den Aktionsdatensatz A wird eine an der Maschine M vornehmbare Steueraktion spezifiziert. Insbesondere können durch den Aktionsdatensatz A Stellgrößen der Maschine M spezifiziert werden, z.B. zum Ausführen einer Bewegungstrajektorie bei einem Roboter oder zum Einstellen einer Gaszufuhr bei einer Gasturbine.

Die generierten Aktionsdatensätze A werden von der Steuereinrichtung CTL schließlich zur Maschine M übermittelt und von dieser ausgeführt. Auf diese Weise wird die Maschine M in einer für den aktuellen Betriebszustand optimierten Weise gesteuert.

Figur 2 veranschaulicht ein Training eines Maschinenlernmoduls NN zur Performanzbewertung einer Steueraktion zum Steuern der Maschine M. Das Maschinenlernmodul NN ist datengetrieben trainierbar und soll einen Zustandsübergang bei Anwendung einer Steueraktion auf einen vorgegebenen Zustand der Maschine M modellieren. Ein solches Maschinenlernmodul wird häufig auch als Transitionsmodell oder dynamisches Systemmodell bezeichnet.

Das Maschinenlernmodul NN kann in der Steuereinrichtung CTL oder ganz oder teilweise extern dazu implementiert sein. Im vorliegenden Ausführungsbeispiel ist das Maschinenlernmodul NN als künstliches neuronales Netz, insbesondere als neuronales Feedforward-Netz implementiert.

Das Maschinenlernmodul NN soll anhand der in der Datenbank DB enthaltenen Trainingsdaten darauf trainiert werden, anhand eines jeweiligen Zustands der Maschine M und einer jeweiligen Steueraktion einen aus Anwendung der Steueraktion resultierenden Folgezustand der Maschine M sowie einen daraus resultierenden Performanzwert für die Maschine M möglichst genau vorherzusagen.

Das Training des Maschinenlernmoduls NN erfolgt anhand der in der Datenbank DB gespeicherten Trainingsdatensätze TD. Ein jeweiliger Trainingsdatensatz TD umfasst hierbei einen Zustandsdatensatz S, einen Aktionsdatensatz A, einen Folgezustandsdatensatz S' sowie einen Performanzwert R. Wie oben bereits erwähnt, spezifizieren die Zustandsdatensätze S jeweils einen Zustand der Maschine M und die Aktionsdatensätze A jeweils eine an der Maschine M vornehmbare Steueraktion. Entsprechend wird durch einen jeweiligen Folgezustandsdatensatz S' ein aus Anwendung der jeweiligen Steueraktion auf den jeweiligen Zustand resultierender Folgezustand, d. h. ein in einem nachfolgenden Zeitschritt eingenommener Systemzustand der Maschine M spezifiziert. Ferner quantifiziert der jeweils zugehörige Performanzwert R die jeweilige Performanz einer Ausführung der jeweiligen Steueraktion im jeweiligen Zustand.

Darüber hinaus enthält ein jeweiliger Trainingsdatensatz TD noch eine Steuersystemkennung CL, durch die der jeweilige Trainingsdatensatz TD demjenigen Steuersystem zugeordnet wird, durch dessen Steuerung der jeweilige Trainingsdatensatz TD erzeugt wurde. Im vorliegenden Ausführungsbeispiel wird die Steuersystemkennung CL beim Training des Maschinenlernmoduls NN allerdings nicht berücksichtigt.

Wie oben schon angedeutet, kann der Performanzwert R insbesondere eine Leistung, einen Ertrag, eine Geschwindigkeit, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, eine physikalische Eigenschaft, eine mechanische Eigenschaft, eine elektrische Eigenschaft, eine einzuhaltende Nebenbedingung und/oder andere aus einer Vornahme der Steueraktion resultierende Betriebsparameter der Maschine M betreffen. Ein solcher Performanzwert wird im Zusammenhang des maschinellen Lernens auch mit den Begriffen Belohnung, Reward oder - komplementär dazu - Kosten oder Loss bezeichnet.

Zum Training des Maschinenlernmoduls NN werden diesem Zustandsdatensätze S sowie Aktionsdatensätze A als Eingabedaten zugeführt. Das Maschinenlernmodul NN soll so trainiert werden, dass dessen Ausgabedaten einen jeweils resultierenden Folgezustand sowie einen jeweils resultierenden Performanzwert möglichst genau reproduzieren. Das Training erfolgt vorzugsweise mittels eines Verfahrens des überwachten maschinellen Lernens.

Unter einem Training sei allgemein eine Optimierung einer Abbildung von Eingabedaten, hier S und A, eines Maschinenlernmoduls auf dessen Ausgabedaten verstanden. Diese Abbildung wird nach vorgegebenen gelernten und/oder zu lernenden Kriterien während einer Trainingsphase optimiert. Als Kriterien können insbesondere bei Prädiktionsmodellen ein Prädiktionsfehler und bei Steuermodellen ein Erfolg einer Steueraktion herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Trainieren lassen sich so insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, K-nächste-Nachbarn-Klassifikatoren, physikalische Modelle oder Entscheidungsbäume. Entsprechend kann das Maschinenlernmodul NN auch durch eines oder mehrere der vorstehend aufgeführten Maschinenlernmodelle implementiert sein oder ein oder mehrere derartige Maschinenlernmodelle umfassen.

Im vorliegenden Ausführungsbeispiel werden dem Maschinenlernmodul NN - wie oben schon erwähnt - Zustandsdatensätze S sowie Aktionsdatensätze A aus den Trainingsdaten als Eingabedaten zugeführt. Zu einem jeweiligen Paar (S, A) von Eingabedatensätzen werden durch das Maschinenlernmodul NN ein Ausgabedatensatz OS' als prädizierter Folgezustandsdatensatz sowie ein Ausgabedatensatz OR als prädizierter Performanzwert ausgegeben. Durch das Training des Maschinenlernmoduls NN wird angestrebt, dass die Ausgabedatensätze OS' mit den tatsächlichen Folgezustandsdatensätzen S' sowie die Ausgabedatensätze OR mit den tatsächlichen Performanzwerten R möglichst gut übereinstimmen.

Zu diesem Zweck wird eine Abweichung DSR zwischen den Ausgabedatensätzen (OS', OR) und den korrespondierenden, in den Trainingsdaten enthaltenen Datensätzen (S', R) ermittelt. Die Abweichung DSR kann hierbei als Reproduktionsfehler oder Prädiktionsfehler des Maschinenlernmoduls NN aufgefasst werden. Der Reproduktionsfehler DSR kann insbesondere durch Berechnung eines euklidischen Abstands zwischen den jeweils darstellenden Vektoren ermittelt werden, z. B. gemäß DSR = (OS' - S')² + (OR - R)².

Der Reproduktionsfehler DSR wird, wie in Figur 2 durch einen strichlierten Pfeil angedeutet, zum Maschinenlernmodul NN zurückgeführt. Anhand des zurückgeführten Reproduktionsfehlers DSR wird das Maschinenlernmodul NN darauf trainiert, den Reproduktionsfehler DSR zumindest im Mittel zu minimieren. Zur Minimierung des Reproduktionsfehlers DSR ist eine Vielzahl von effizienten Optimierungsverfahren verfügbar. Durch die Minimierung des Reproduktionsfehlers DSR wird das Maschinenlernmodul NN darauf trainiert, zu einem vorgegebenen Zustand und einer vorgegebenen Steueraktion einen resultierenden Folgezustand sowie einen resultierenden Performanzwert möglichst gut vorherzusagen.

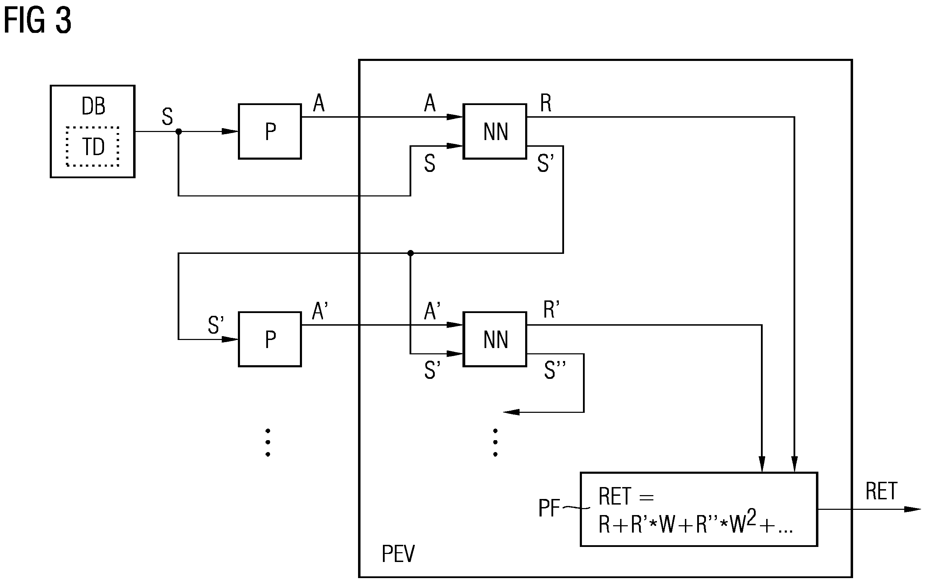

Figur 3 veranschaulicht eine Ermittlung einer Performanz eines Steuerungsagenten P durch einen Performanzbewerter PEV. Der Performanzbewerter PEV umfasst das Maschinenlernmodul NN, das wie oben beschrieben trainiert ist.

Zur Illustration aufeinanderfolgender Verarbeitungsschritte sind in Figur 3 mehrere Instanzen des trainierten Maschinenlernmoduls NN sowie des zu bewertenden Steuerungsagenten P schematisch dargestellt. Die verschiedenen Instanzen können insbesondere verschiedenen Aufrufen oder Auswertungen von Routinen entsprechen, mittels derer das Maschinenlernmodul NN bzw. der Steuerungsagent P implementiert sind.

Zur Ermittlung der Performanz des Steuerungsagenten P werden Zustandsdatensätze S aus den Trainingsdaten TD in den Steuerungsagenten P als Eingabedaten eingespeist, der daraus Ausgabedaten A ableitet, die als Aktionsdatensätze aufzufassen sind. Für ein jeweiliges Paar (S, A) eines jeweiligen Zustandsdatensatzes S und eines jeweiligen Aktionsdatensatzes A prädiziert der Performanzbewerter PEV mittels des trainierten Maschinenlernmoduls NN eine Gesamtperformanz RET, die eine aus Anwendung der jeweiligen Steueraktion A resultierende, über mehrere Zeitschritte in die Zukunft akkumulierte Performanz der Maschine M quantifiziert. Eine solche Gesamtperformanz wird im technischen Umfeld des maschinellen Lernens, insbesondere des bestärkenden Lernens häufig auch als "Return" bezeichnet.

Zur Ermittlung der Gesamtperformanz RET wird der jeweilige Aktionsdatensatz A zusammen mit dem jeweiligen Zustandsdatensatz S in das trainierte Maschinenlernmodul NN eingespeist, das daraus einen Folgezustand vorhersagt und einen diesen spezifizierenden Folgezustandsdatensatz S' sowie einen zugehörigen Performanzwert R ausgibt. Der Folgezustandsdatensatz S' wird wiederum in eine weitere Instanz des Steuerungsagenten P eingespeist, der daraus einen Aktionsdatensatz A' für den Folgezustand ableitet. Der Aktionsdatensatz A' wird zusammen mit dem jeweiligen Folgezustandsdatensatz S' in eine weitere Instanz des Maschinenlernmoduls NN eingespeist, das daraus einen weiteren Folgezustand vorhersagt und einen diesen spezifizierenden Folgezustandsdatensatz S" sowie einen zugehörigen Performanzwert R' ausgibt.

Die vorstehenden Verfahrensschritte können iterativ wiederholt werden, wobei Performanzwerte für weitere Folgezustände ermittelt werden. Die Iteration kann bei Vorliegen einer Abbruchbedingung beendet werden, z.B. bei Überschreiten einer vorgegebenen Anzahl von Iterationen. Auf diese Weise kann eine mehrere Zeitschritte umfassende, von Folgezustand zu Folgezustand weiterschreitende Steuertrajektorie mit zugehörigen Performanzwerten R, R', R", ... ermittelt werden.

Die ermittelten Performanzwerte R, R', R", ... werden einer Performanzfunktion PF zugeführt.

Die Performanzfunktion PF ermittelt für eine jeweilige Steuertrajektorie die über die Steuertrajektorie akkumulierte Gesamtperformanz RET. Die ermittelte Gesamtperformanz RET wird dann der Steueraktion, hier A, am Anfang der Steuertrajektorie zugeordnet. Die Gesamtperformanz RET bewertet so eine Fähigkeit des Steuerungsagenten P zu einem jeweiligen Zustandsdatensatz S eine günstige, performanzoptimierende Steueraktion, hier A, zu ermitteln. Die Gesamtperformanz RET wird durch die Performanzfunktion PF vorzugsweise als über die zukünftigen Zeitschritte einer Steuertrajektorie diskontierte Performanz berechnet.

Zu diesem Zweck wird durch die Performanzfunktion PF vorzugsweise eine gewichtete Summe der Performanzwerte R, R', R", ... berechnet, deren Gewichte mit jedem Zeitschritt in die Zukunft mit einem Diskontierungsfaktor W < 1 multipliziert werden. Auf diese Weise kann die Gesamtperformanz RET berechnet werden gemäß RET = R + R' * W + R" * W² + ... Für den Diskontierungsfaktor W kann z. B. ein Wert von 0,99 oder 0,9 eingesetzt werden.

Die prädizierte Gesamtperformanz RET wird schließlich durch den Performanzbewerter PEV als Bewertungsergebnis für den Steuerungsagenten P ausgegeben.

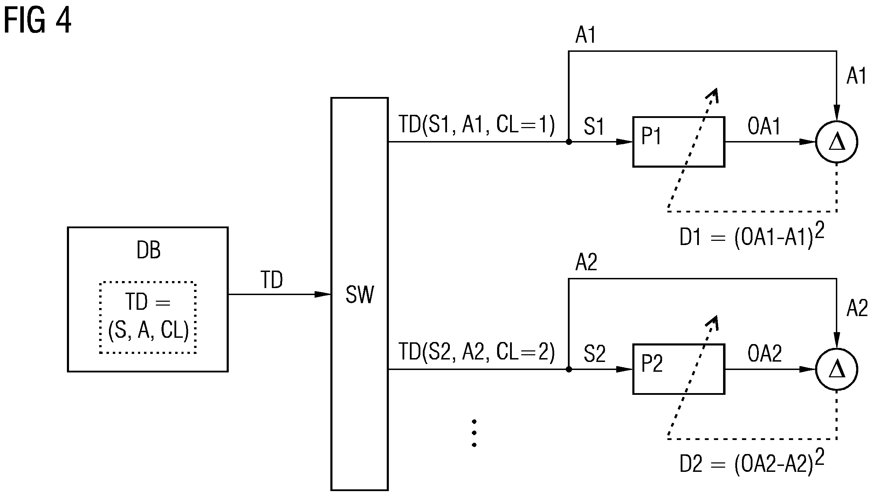

Figur 4 veranschaulicht ein Training von steuersystemspezifischen Steuerungsagenten P1, P2, ... anhand der Trainingsdatensätze TD. Die zu trainierenden Steuerungsagenten P1, P2, ... sind vorzugsweise deterministische Steuerungsagenten.

Wie oben bereits erwähnt, wurden die Trainingsdatensätze TD durch die Steuerung der Maschine M, einer dazu ähnlichen Maschine oder einer Simulation der Maschine M mittels verschiedener Steuersysteme gewonnen. Ein jeweiliger Trainingsdatensatz TD ist dabei dem jeweils betreffenden Steuersystem durch die im jeweiligen Trainingsdatensatz TD enthaltene Steuersystemkennung CL zugeordnet. Entsprechend sind der im jeweiligen Trainingsdatensatz TD enthaltene Zustandsdatensatz S und Aktionsdatensatz A durch die Steuersystemkennung CL ebenfalls dem jeweiligen Steuersystem zugeordnet.

In Figur 4 werden die dem Steuersystem mit CL=1 zugeordneten Zustandsdatensätze als S1 und die zugehörigen Aktionsdatensätze als A1 bezeichnet. Entsprechend werden die dem Steuersystem mit CL=2 zugeordneten Zustandsdatensätze als S2 und die zugehörigen Aktionsdatensätze als A2 bezeichnet. Die zusätzlich in den Trainingsdatensätzen TD enthaltenen Folgezustandsdatensätze und Performanzwerte sind aus Gründen der Übersichtlichkeit in Figur 4 unterdrückt.

Es sei angemerkt, dass die verschiedenen Steuersysteme für das Training der Steuerungsagenten P1, P2, ... nicht explizit bekannt sein müssen. Es genügt vielmehr, dass die von verschiedenen Steuersystemen stammenden Trainingsdatensätze TD voneinander unterschieden werden können.

Auf diese Weise soll für jedes der unterscheidbaren Steuersysteme ein Steuerungsagent P1 bzw. P2, ... individuell anhand der dem jeweiligen Steuersystem zugeordneten Trainingsdatensätze TD trainiert werden. Jedem der Steuersysteme wird somit ein steuersystemspezifischer Steuerungsagent P1 bzw. P2, ... zugeordnet. Derartige steuersystemspezifische Steuerungsagenten lassen sich in der Regel genauer, effizienter und/oder schneller auf eine Reproduktion eines Steuerverhaltens eines jeweiligen Steuersystems trainieren als ein einzelner steuersystemunspezifischer Steuerungsagent.

Im vorliegenden Ausführungsbeispiel sind die Steuerungsagenten P1, P2, ... vorzugsweise als künstliche neuronale Netze, insbesondere als sogenannte Feedforward-Netze implementiert.

Die Steuerungsagenten P1, P2, ... sollen anhand der Trainingsdaten steuersystemspezifisch darauf trainiert werden, anhand eines jeweiligen Zustands der Maschine M eine zugehörige Steueraktion des jeweils zugeordneten Steuersystems vorherzusagen.

Zu diesem Zweck werden die Trainingsdatensätze TD aus der Datenbank DB zu einem Verteiler SW übermittelt. Der Verteiler SW dient dem Zweck, die Trainingsdatensätze TD anhand der enthaltenen Steuersystemkennungen CL in steuersystemspezifische Trainingsdatensätze TD(S1, A1, CL=1), TD(S2, A2, CL=2), ... aufzuteilen. Entsprechend werden durch den Verteiler SW die Trainingsdatensätze TD(S1, A1, CL=1) mit der Steuersystemkennung CL=1 zum Training des Steuerungsagenten P1 und die Trainingsdatensätze TD(S2, A2, CL=2) mit der Steuersystemkennung CL=2 zum Training des Steuerungsagenten P2 weitergeleitet. Analog dazu können weitere steuersystemspezifische Trainingsdatensätze zum Training weiterer steuersystemspezifischer Steuerungsagenten weitergeleitet werden.

Zum steuersystemspezifischen Training des Steuerungsagenten P1 werden diesem die in den Trainingsdatensätzen TD(S1, A1, CL=1) enthaltenen Zustandsdatensätze S1 als Eingabedaten zugeführt. Aus den Eingabedaten S1 leitet der Steuerungsagent P1 Ausgabedaten OA1 ab. Der Steuerungsagent P1 soll so trainiert werden, dass die aus einem jeweiligen Zustandsdatensatz S1 abgeleiteten Ausgabedaten OA1 den im selben Trainingsdatensatz TD enthaltenen jeweiligen Aktionsdatensatz A1 zumindest im Mittel möglichst genau reproduzieren. Zu diesem Zweck wird eine Abweichung D1 zwischen den Ausgabedatensätzen OA1 und den korrespondierenden Aktionsdatensätzen A1 ermittelt. Die Abweichung D1 kann als Reproduktionsfehler des Steuerungsagenten P1 aufgefasst werden. Der Reproduktionsfehler D1 kann insbesondere durch Berechnung eines euklidischen Abstands zwischen den jeweils darstellenden Vektoren ermittelt werden, z. B. gemäß D1 = (OA1 - A1)².

Der Reproduktionsfehler D1 wird, wie in Figur 4 durch einen strichlierten Pfeil angedeutet, zum Steuerungsagenten P1 zurückgeführt. Anhand es zurückgeführten Reproduktionsfehlers D1 wird der Steuerungsagent P1 darauf trainiert, diesen Reproduktionsfehler D1 zumindest im Mittel zu minimieren. Hierbei können die gleichen Optimierungsverfahren angewandt werden, wie im Falle des ersten Maschinenlernmoduls NN.

Durch die Minimierung des Reproduktionsfehlers D1 wird der Steuerungsagent P1 darauf trainiert, zu einem vorgegebenen Zustand eine Steueraktion auszugeben, die ein Steuerverhalten des zugeordneten Steuersystems reproduziert.

In genauer Entsprechung kann der steuersystemspezifische Steuerungsagent P2 anhand der steuersystemspezifischen Trainingsdatensätze TD(S2, A2, CL=2) trainiert werden. Analog dazu können weitere steuersystemspezifische Steuerungsagenten anhand weiterer steuersystemspezifischer Trainingsdatensätze trainiert werden.

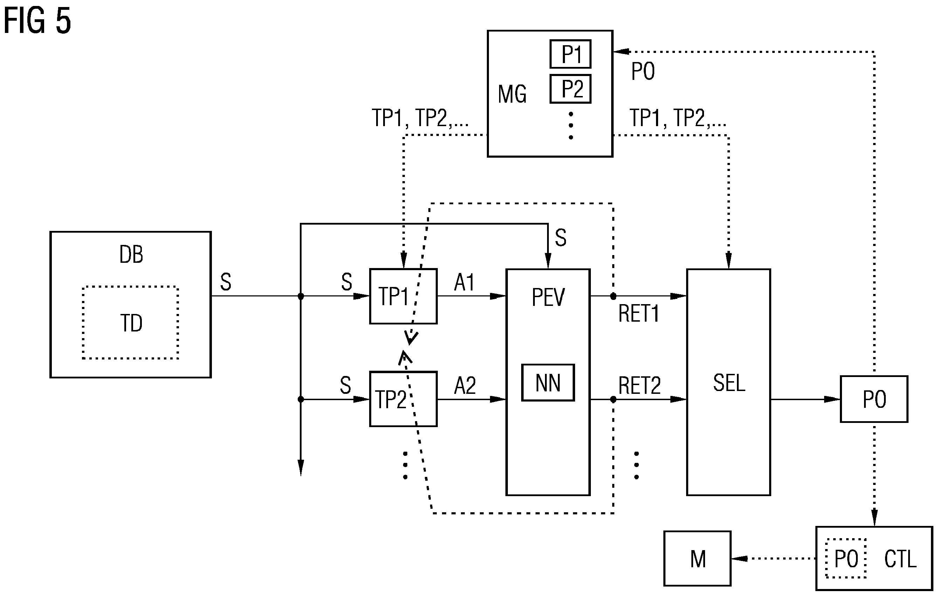

Figur 5 veranschaulicht eine Ermittlung eines performanzoptimierenden Steuerungsagenten PO zum Steuern der Maschine M. Zu diesem Zweck werden zunächst das Maschinenlernmodul NN des Performanzbewerters PEV sowie die steuersystemspezifischen Steuerungsagenten P1, P2, ... wie oben beschrieben trainiert.

Auf der Basis der trainierten steuersystemspezifischen Steuerungsagenten P1, P2, ... generiert ein Modellgenerator MG eine Vielzahl von vorzugsweise deterministischen Test-Steuerungsagenten TP1, TP2, ..., die jeweils nur wenig von einem der trainierten steuersystemspezifischen Steuerungsagenten P1, P2, ... abweichen.

Die Test-Steuerungsagenten TP1, TP2, ... sind vorzugsweise als künstliche neuronale Netze implementiert. Als solche sind die Test-Steuerungsagenten TP1, TP2, ... durch eine Verknüpfungsstruktur ihrer Neuronen sowie durch Gewichte von Verbindungen zwischen den Neuronen spezifiziert. Ein jeweiliger Test-Steuerungsagent TP1 bzw. TP2, ... kann vom Modellgenerator MG also generiert werden, indem ein Satz von neuronalen Gewichten und/oder ein eine Neuronenverknüpfung angebender Datensatz erzeugt und ausgegeben wird. Für das vorliegende Ausführungsbeispiel sei angenommen, dass der Modellgenerator MG die unterschiedlichen deterministischen Test-Steuerungsagenten TP1, TP2, ... in Form von unterschiedlichen Sätzen von neuronalen Gewichten generiert.

Um Test-Steuerungsagenten TP1, TP2, ... zu generieren, die nur wenig von den trainierten steuersystemspezifischen Steuerungsagenten P1, P2, ... abweichen, wird für einen jeweiligen trainierten steuersystemspezifischen Steuerungsagenten P1 bzw. P2, ... eine jeweilige Umgebung in einem Parameterraum der Steuerungsagenten abgegrenzt. Der Parameterraum kann insbesondere ein Vektorraum von neuronalen Gewichten oder ein Vektorraum anderer Modellparameter der Steuerungsagenten sein.

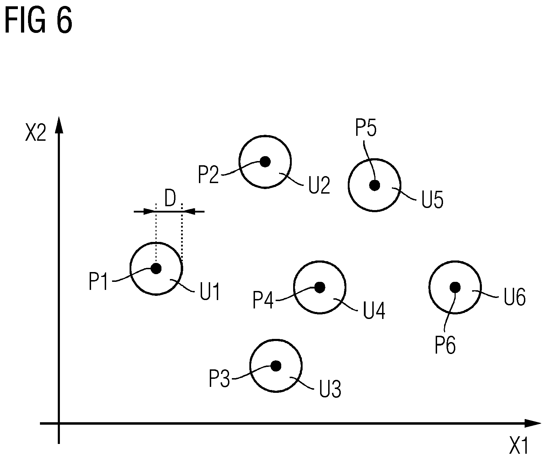

Figur 6 veranschaulicht verschiedene Parameterraumumgebungen U1, ..., U6 von verschiedenen steuersystemspezifischen Steuerungsagenten P1, ..., P6. Der Parameterraum ist in der Regel ein hochdimensionaler Vektorraum, von dem in Figur 6 zwei Parameter X1 und X2 stellvertretend dargestellt sind.

Im vorliegenden Ausführungsbeispiel wird die Umgebung U1 als dasjenige Gebiet des Parameterraums abgegrenzt, in dem eine Abweichung eines Parametervektors (X1, X2, ...) von einem Parametervektor des steuersystemspezifischen Steuerungsagenten P1 einen vorgegebenen Schwellwert D unterschreitet. Entsprechend ist eine jeweilige Umgebung U2, ... bzw. U6 als dasjenige Gebiet im Parameterraum definiert, in dem eine Abweichung eines Parametervektors (X1, X2, ...) von einem Parametervektor des steuersystemspezifischen Steuerungsagenten P2, ... bzw. P6 den Schwellwert D unterschreitet.

Im vorliegenden Ausführungsbeispiel generiert der Modellgenerator MG innerhalb jeder der Umgebungen U1, U2, ... eine Vielzahl von Test-Steuerungsagenten. Die insgesamt generierten Test-Steuerungsagenten TP1, TP2, ... befinden sich somit jeweils innerhalb eines vorgebbaren Abstands D zu zumindest einem der trainierten steuersystemspezifischen Steuerungsagenten P1, P2, ... und weisen deshalb in der Regel ein ähnliches Steuerverhalten auf. Auf diese Weise können Test-Steuerungsagenten wirksam ausgeschlossen werden, die unzulässige oder schwer nachteilige Steueraktionen ausgeben würden. Darüber hinaus kann der Abstand D variiert werden, um so eine zulässige Abweichung von bekannten und ggf. validierten Steuerungsagenten einzustellen.

Wie Figur 5 weiter veranschaulicht, werden den generierten Test-Steuerungsagenten TP1, TP2, ... jeweils Zustandsdatensätze S aus der Datenbank DB als Eingabedaten zugeführt. Zu einem jeweiligen Zustandsdatensatz S gibt der Test-Steuerungsagent TP1 einen jeweiligen Aktionsdatensatz A1 und der Test-Steuerungsagent TP2 einen jeweiligen Aktionsdatensatz A2 aus. Die weiteren generierten Test-Steuerungsagenten geben analog dazu weitere Aktionsdatensätze aus.

Ein jeweiliger Aktionsdatensatz A1 des Test-Steuerungsagenten TP1 wird in den Performanzbewerter PEV eingespeist, der für diesen Aktionsdatensatz A1 eine Gesamtperformanzwert RET1, wie oben beschrieben, prädiziert. Analog dazu ermittelt der Performanzbewerter PEV für einen jeweiligen Aktionsdatensatz A2 jeweils einen zugehörigen Gesamtperformanzwert RET2. Aktionsdatensätze weiterer generierter Test-Steuerungsagenten werden analog verarbeitet.

Die prädizierten Gesamtperformanzwerte RET1, RET2... werden vom Performanzbewerter PEV in ein Selektionsmodul SEL eingespeist. Das Selektionsmodul SEL dient dem Zweck, aus den generierten Test-Steuerungsagenten TP1, TP2, ... einen oder mehrere performanzoptimierende Steuerungsagenten PO zu selektieren.

Zu diesem Zweck werden dem Selektionsmodul SEL die Test-Steuerungsagenten TP1, TP2, ... vom Modellgenerator MG zugeführt. Aus diesen werden durch das Selektionsmodul SEL derjenige oder diejenigen Test-Steuerungsagenten selektiert, die zumindest im Mittel die größten Gesamtperformanzwerte aufweisen. Im vorliegenden Ausführungsbeispiel wird auf diese Weise mindestens ein performanzoptimierender Steuerungsagent PO durch das Selektionsmodul SEL selektiert und ausgegeben.

Vorzugsweise kann der mindestens eine performanzoptimierende Steuerungsagent PO vom Selektionsmodul SEL wiederum in den Modellgenerator MG eingespeist werden. Auf diese Weise kann die weitere Generierung von Test-Steuerungsagenten durch den Modellgenerator MG im Sinne eines genetischen, populationsbasierten, partikelschwarmbasierten oder eines anderen gradientenfreien Optimierungsverfahrens oder mittels eines gradientenbasierten Optimierungsverfahrens in Richtung des mindestens einen performanzoptimierenden Steuerungsagenten PO getrieben werden.

Neben einer Selektion der Test-Steuerungsagenten TP1, TP2, ... können diese auch anhand der Trainingsdatensätze TD darauf trainiert werden, zu einem jeweils eingespeisten Zustandsdatensatz S eine performanzoptimierende Steueraktion in Form eines Aktionsdatensatzes zu ermitteln. Zu diesem Zweck können - wie in Figur 5 durch strichlierte Pfeile angedeutet - die Gesamtperformanzwerte RET1 zum Test-Steuerungsagenten TP1 und die Gesamtperformanzwerte RET2 zum Test-Steuerungsagenten TP2 zurückgeführt werden. Entsprechendes gilt für weitere generierte Test-Steuerungsagenten.

Die Modellparameter eines jeweiligen Test-Steuerungsagenten TP1 bzw. TP2, ... können dann jeweils so eingestellt werden, dass die jeweiligen Gesamtperformanzwerte zumindest im Mittel maximiert werden, sofern der jeweilige Test-Steuerungsagent TP1 bzw. TP2, ... dabei innerhalb seiner Parameterraumumgebung U1 bzw. U2, ... bleibt. Durch das vorstehend beschriebene Training kann in vielen Fällen die Performanz des mindestens einen performanzoptimierenden Steuerungsagenten PO weiter verbessert werden. Zur konkreten Durchführung des Trainings kann auf eine Vielzahl von effizienten Standardverfahren zurückgegriffen werden.

Der mindestens eine vom Selektionsmodul SEL selektierte performanzoptimierende Steuerungsagent PO kann schließlich, wie im Zusammenhang mit Figur 1 erläutert, zum Steuern der Maschine M eingesetzt werden. Insofern der mindestens eine performanzoptimierende Steuerungsagent PO vorzugsweise ein deterministischer Steuerungsagent ist, wird die Maschine M deterministisch gesteuert, was eine Validierung der Steuerung gegenüber einer stochastischen Steuerung erheblich vereinfacht. Falls mehrere performanzoptimierende Steuerungsagenten PO selektiert werden, kann daraus ein Steuerungsagent PO mit der besten Performanz ausgewählt werden. Letzterer kann dann zur Steuereinrichtung CTL übertragen werden, um diese zum Steuern der Maschine M zu konfigurieren.

## Patentansprüche

1. Computerimplementiertes Verfahren zum Steuern einer Maschine (M) mittels eines Steuerungsagenten, wobei
a) durch Steuerung der Maschine (M) mittels verschiedener Steuersysteme gewonnene und einem jeweiligen Steuersystem zugeordnete Trainingsdatensätze (TD) eingelesen werden, die jeweils einen einen Zustand der Maschine (M) spezifizierenden Zustandsdatensatz (S) sowie einen eine Steueraktion spezifizierenden Aktionsdatensatz (A) umfassen,
b) ein Performanzbewerter (PEV) bereitgestellt wird, der für einen Steuerungsagenten (TP1, TP2,...) eine Performanz für ein Steuern der Maschine (M) durch diesen Steuerungsagenten ermittelt,
c) für die verschiedenen Steuersysteme jeweils ein steuersystemspezifischer Steuerungsagent (P1,P2,...) anhand der dem jeweiligen Steuersystem zugeordneten Trainingsdatensätze darauf trainiert wird, anhand eines Zustandsdatensatzes (S) einen Aktionsdatensatz (A) zu reproduzieren,
d) in einem Parameterraum der steuersystemspezifischen Steuerungsagenten (P1,P2,...) eine jeweilige Umgebung (U1,U2,...) um die trainierten steuersystemspezifischen Steuerungsagenten (P1,P2,...) anhand eines Abstandsmaßes (D) abgegrenzt wird,
e) innerhalb der Umgebungen (U1,U2,...) eine Vielzahl von Test-Steuerungsagenten (TP1, TP2,...) generiert wird, für die jeweils ein Performanzwert durch den Performanzbewerter (PEV) ermittelt wird,
f) abhängig von den ermittelten Performanzwerten ein performanzoptimierender Steuerungsagent (PO) aus den Test-Steuerungsagenten (TP1, TP2,...) selektiert wird, und
g) die Maschine mittels des performanzoptimierenden Steuerungsagenten (PO) gesteuert wird.

2. Verfahren nach Anspruch 1, **dadurch gekennzeichnet, dass** als Abstandsmaß (D) für einen Abstand zwischen einem ersten und einem zweiten Steuerungsagenten im Parameterraum
- eine Abweichung von neuronalen Gewichten oder anderen Modellparametern des ersten Steuerungsagenten von denjenigen des zweiten Steuerungsagenten und/oder
- eine Abweichung eines Steuerverhaltens des ersten Steuerungsagenten von demjenigen des zweiten Steuerungsagenten ermittelt wird.

3. Verfahren nach einem der vorhergehenden Ansprüche, **dadurch gekennzeichnet, dass**
ein populationsbasiertes Optimierungsverfahren, ein gradientenfreies Optimierungsverfahren, eine Partikelschwarmoptimierung, ein genetisches Optimierungsverfahren und/oder ein gradientenbasiertes Optimierungsverfahren dazu verwendet wird, die Test-Steuerungsagenten (TP1, TP2,...) zu generieren und/oder anhand der ermittelten Performanzwerte eine performanzgetriebene Optimierung auszuführen.

4. Verfahren nach einem der vorhergehenden Ansprüche, **dadurch gekennzeichnet, dass**
in jeder der Umgebungen (U1,U2,...) jeweils
- eine Vielzahl von Test-Steuerungsagenten generiert wird und/oder
- eine performanzgetriebene Optimierung von Test-Steuerungsagenten ausgeführt wird.

5. Verfahren nach einem der vorhergehenden Ansprüche, **dadurch gekennzeichnet,**
**dass** ein jeweiliger Trainigsdatensatz (TD) neben einem Zustandsdatensatz (S) und einem eine Steueraktion spezifizierenden Aktionsdatensatz (A) einen aus einer Anwendung dieser Steueraktion resultierenden Performanzwert (R) umfasst, und
**dass** der Performanzbewerter (PEV) ein Maschinenlernmodul (NN) umfasst, das darauf trainiert ist oder anhand der Trainingsdatensätze (TD) darauf trainiert wird, anhand eines Zustandsdatensatzes (S) und eines Aktionsdatensatzes (A) einen resultierenden Performanzwert (R) zu reproduzieren.

6. Verfahren nach Anspruch 5, **dadurch gekennzeichnet,**
**dass** dem jeweiligen Test-Steuerungsagenten (TP1, TP2,...) Zustandsdatensätze (S) zugeführt werden und resultierende Ausgabedaten des jeweiligen Test-Steuerungsagenten (TP1, TP2,...) als Aktionsdatensätze (A) zusammen mit den Zustandsdatensätzen (S) in das trainierte Maschinenlernmodul (NN) eingespeist werden, und
**dass** aus einem resultierenden Ausgabewert des trainierten Maschinenlernmoduls (NN) ein Performanzwert (R) für den jeweiligen Test-Steuerungsagenten (TP1, TP2,...) ermittelt wird.

7. Verfahren nach einem der vorhergehenden Ansprüche, **dadurch gekennzeichnet,**
**dass** die Steuerungsagenten (P1,P2, ..., TP1,TP2,..., PO) und/oder der Performanzbewerter (PEV) ein künstliches neuronales Netz, ein rekurrentes neuronales Netz, ein faltendes neuronales Netz, ein mehrlagiges Perzeptron, ein bayessches neuronales Netz, einen Autoencoder, einen variationalen Autoencoder, einen Gauß-Prozess, eine Deep-Learning-Architektur, eine Support-Vektor-Maschine, ein datengetriebenes trainierbares Regressionsmodell, einen k-nächste-Nachbarn-Klassifikator, ein physikalisches Modell und/oder einen Entscheidungsbaum umfassen.

8. Verfahren nach einem der vorhergehenden Ansprüche, **dadurch gekennzeichnet,**
**dass** die Maschine (M) ein Roboter, ein Motor, eine Fertigungsanlage, eine Fabrik, eine Werkzeugmaschine, eine Fräsmaschine, eine Gasturbine, eine Windturbine, eine Dampfturbine, ein chemischer Reaktor, eine Kühlanlage oder eine Heizungsanlage ist.

9. Steuereinrichtung (CTL) zum Steuern einer Maschine (M), eingerichtet zum Ausführen aller Verfahrensschritte eines Verfahrens nach einem der vorhergehenden Ansprüche.

10. Computerprogrammprodukt eingerichtet zum Ausführen aller Verfahrensschritte eines Verfahrens nach einem der Ansprüche 1 bis 8.

11. Computerlesbares Speichermedium mit einem Computerprogrammprodukt nach Anspruch 10.
